# EUROPEAN PATENT APPLICATION

(11) **EP 4 648 493 A1**
(43) Date of publication of application: **12.11.2025**
(21) Application number: 24175248.4
(22) Date of filing: 10.05.2024
(51) Int. Cl.: H04W 52/02

(54) **COMMUNICATION APPARATUS AND BASE STATION INVOLVED IN COMMON CHANNEL ADAPTATION TRIGGERING**

(71) Applicant: Panasonic Intellectual Property Corporation of America, Torrance, CA 90504 (US)
(72) Inventor: LI, Hongchao, 63225 Langen (DE); KURUVATTI, Nandish, 63225 Langen (DE); HORIUCHI, Ayako, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

Provided are a communication apparatus, a base station, and corresponding communication methods. The communication apparatus comprises a transceiver, which, in operation, receives a configuration of one or more candidate random access resources for transmitting an uplink request for switching or adaptation of a common channel, wherein each of the one or more candidate random access resources is associated with one or both out of:
• a cell from among one or more cells including a current serving cell of the communication apparatus, or
• a targeted behavior of the communication apparatus; and
circuitry which, in operation, determines, based on the configuration, a random access resource for transmitting the uplink request from the one or more candidate random access resources, wherein the transceiver, in operation, transmits the uplink request on the determined random access resource.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

In an embodiment, the techniques disclosed here feature a communication apparatus, comprising a transceiver, which, in operation, receives a configuration of one or more candidate random access resources for transmitting an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus; and
circuitry which, in operation, determines, based on the configuration, a random access resource for transmitting the uplink request from the one or more candidate random access resources, wherein the transceiver, in operation, transmits the uplink request on the determined random access resource.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Fig. 1**: shows an exemplary architecture for a 3GPP NR system to which exemplary embodiments of the present disclosure may be applied;
- **Fig. 2**: is a block diagram of a communication system in accordance with exemplary embodiments of the present disclosure;
- **Fig. 3**: is a block diagram of exemplary circuitry of a communication apparatus in accordance with exemplary embodiments of the present disclosure;
- **Fig. 4**: is a block diagram of exemplary circuitry of a base station in accordance with exemplary embodiments of the present disclosure;
- **Fig. 5**: is a flow chart showing method steps for a communication apparatus in accordance with exemplary embodiments of the present disclosure;
- **Fig. 6**: is a flow chart showing method steps for a base station in accordance with exemplary embodiments of the present disclosure;
- **Fig. 7**: illustrates configurations for uplink wakeup signal (UL WUS) sent to an anchor cell or a network energy saving cell, in accordance with exemplary embodiments of the present disclosure;
- **Fig. 8**: illustrates configurations for UL WUS sent for camping or random access, in accordance with exemplary embodiments of the present disclosure;
- **Fig. 9**: illustrates communication between a UE and the network where the UE sends a triggering message and cell selection reporting to the anchor cell, in accordance with exemplary embodiments of the present disclosure;
- **Fig. 10**: illustrates communication between a UE and the network where the UE sends a triggering message to the anchor cell, in accordance with exemplary embodiments of the present disclosure;
- **Fig. 11**: illustrates communication between a UE and the network where the UE sends a triggering message to a NES for camping, in accordance with exemplary embodiments of the present disclosure;
- **Fig. 12**: illustrates communication between a UE and the network where the UE sends a triggering message to a NES for random access, in accordance with exemplary embodiments of the present disclosure; and
- **Fig. 13**: shows exemplary functional split options in 5G O-RAN to which exemplary embodiments of the present disclosure may be applied.

### DETAILED DESCRIPTION

### 5G NR system architecture and protocol stacks

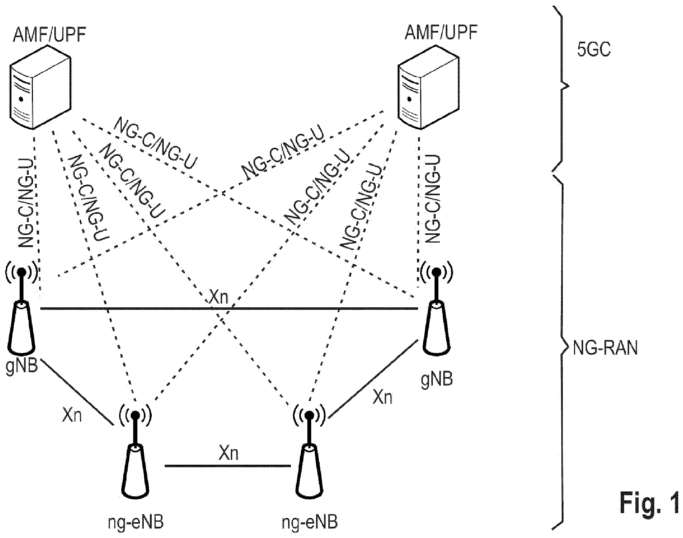

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Network energy saving (NES)

In telecommunications networks, network energy saving (NES) has been identified as an important issue with regard to environmental sustainability, to reduce environmental impact (greenhouse gas emissions), and for operational cost savings. In 3GPP 5G Release 19, work items for NES have been formulated including the following four features (see e.g. RP-234065, "New WID: Enhancements of network energy savings for NR", section 4).

Firstly, procedures and signaling method(s) are to be specified to support on-demand SSB (synchronization signal block) SCell (Secondary cell) operation for UEs (user equipments) in connected mode configured with carrier aggregation (CA), for both intra-/inter-band CA. This includes selection of triggering method(s) such as UE uplink wake-up-signal using an existing signal/channel, cell on/off indication via backhaul, and SCell activation/deactivation signaling. It is noted that on-demand SSB transmission can be used by UE for at least SCell time/frequency synchronization, L1/L3 (layer 1 / layer3) measurements and SCell activation, and is supported for FR1 (frequency range 1, including sub-6 GHz frequency bands) and FR2 (including frequency bands from 24.25 GHz to 71.0 GHz) in non-shared spectrum.

Secondly, procedures and signaling method(s) are to be studied to support on-demand SIB1 (system information block 1) for UEs in idle/inactive mode. This includes triggering method by uplink wake-up-signal using an existing signal/channel, wake-up-signal configuration provisioning to UE, and information exchange between gNBs at least for the configuration of wake-up signal, if necessary.

Thirdly, adaptation of common signal/channel transmissions is to be specified, including adaptation of SSB in time domain, e.g. adapting periodicity, and adaptation of PRACH in time domain (a further issue for study and possible specification is adaptation of PRACH (physical random access channel) in spatial domain, e.g. non-uniform PRACH resources per SSB), and adaptation of paging occasions including confining the paging occasions in the time domain. Therein, it is desirable to have no negative impact to legacy UEs, unless significant benefits are shown.

Fourthly, the corresponding core requirements for the above features are to be specified.

### UL WUS for triggering the SIB 1

In the context of network energy saving, usage of physical random access channel (PRACH) for an uplink wakeup signal (UL WUS) to trigger the SIB1 is being discussed. For discussion purpose, "Cell A" may refer to a cell that is periodically transmitting its own SIB1 (system information block 1), and "NES Cell" may refer to a cell that may transmit SIB1 on demand in response to UL WUS from a user equipment (UE).

For the further study of on-demand SIB1 for idle/inactive mode, the following cases may be considered:
- Case 1: Option 1+A+X;
- Case 2: Option 1+B+X;
- Case 3: Option 2+B+Y;
where the options 1/2/A/B/X/Y are defined below:
- On target cell of UL WUS transmission:
   - Option 1: UE transmits UL WUS to NES Cell;
   - Option 2: UE transmits UL WUS to Cell A;
- On configuration provision for UL WUS transmission:
   - Option A: UE obtains the UL WUS configuration from NES Cell;
   - Option B: UE obtains the UL WUS configuration from Cell A;
- On receiving of SIB1:
   - Option X: UE receives on-demand SIB1 from NES Cell;
   - Option Y: UE receives on-demand SIB1 from Cell A.

As possible assumption in UL WUS design for SIB1 request, a dedicated PRACH resource or resources may be used for the SIB1 request. With this assumption, details on time, frequency, and/or PRACH preamble resources for the UL WUS need to be specified. A further point to be specified is whether RACH resource for SIB1 request could be used for an initial access procedure and/or an on-demand SI procedure.

In the UL WUS design, operation scenarios to be considered may include the following: In a Scenario 1, the UE requests SIB1 to camp on a NES cell. In Scenario 2, the UE requests SIB1 to perform random access procedure to make RRC connection to a NES cell.

"Camping on a cell" means that the UE associates itself with the cell after having completed cell (re)selection, registers its presence with the network, and remains connected to it for communication purposes. A UE camping on a cell can receive system information, monitor paging information periodically and launch random access when necessary to establish RRC connection.

### Further issues

The inventors have noted several issues with regard to the UE behavior on transmitting UL WUS to trigger SIB1. Therein, one issue is to specify to which cell the UL WUS is to be transmitted. Further issues regard the questions whether and how the network is to be informed which cell(s)' SIB is requested, and, in return, how the UE knows which cell(s)' SIB is triggered by the network. A further issue is whether and how the network should be informed of the purpose of requesting the SIB1, where "purpose" may refer to the operation scenarios such as the aforementioned camping (e.g. Scenario 1) or random access procedure to make a RRC connection (e.g. Scenario 2). A further point is whether the network needs to inform the UE of the consequential procedure after the SIB1 has been triggered, and how the UE is informed by the network of the procedure. A further point noted by the inventors regards the question how to handle power control for the UL WUS transmission.

### Embodiments

In view of the above, the present disclosure provides techniques related to common signal adaptation triggering.

The present disclosure in particular provides base stations, which may include scheduling devices or scheduling apparatuses (such as scheduling nodes), corresponding methods for base stations, communication devices or communication apparatuses (e.g. adapted/configured to perform the function of a communication terminal in a communication system), corresponding methods and (computer) programs (e.g. stored on a memory) for communication devices (or apparatuses), communications systems comprising such scheduling devices and communication devices, as well as integrated circuits which, in operation, control a processes of scheduling devices/communication devices to perform the respective methods.

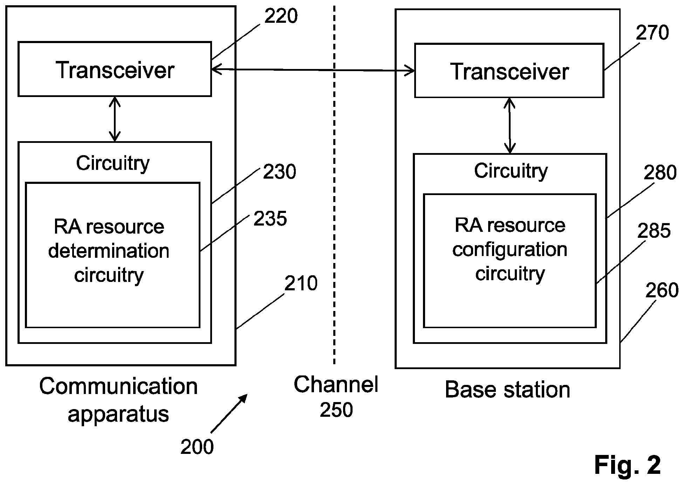

An example of such communication system is illustrated in **Fig. 2****.** The communication system 200 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 2** illustrates a general, simplified and exemplary block diagram of a communication apparatus 210 (which may be exemplarily assumed to be a user equipment (UE) or communication terminal or communication apparatus) and a scheduling device or scheduling node (here exemplarily assumed to be located in a base station 260, e.g. in a LTE eNB (alternatively termed ng-eNB) or the gNB in 5G NR) in the communication system 200. However, in general, a scheduling device may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 210 may also be a sensor device, a wearable device, or a connected vehicle, or a controller of an automated machine in an industrial factory.

As illustrated in **Fig. 2****,** the communication apparatus 210 and the scheduling device or base station 260 (eNB/gNB) may communicate with each other over a (wireless) physical channel 250 respectively using their transceivers 220 (communication apparatus side) and 270 (base station side). Together, the base station 260 and the communication apparatus 210 may form the communication system 200. The communication system 200 may further include other entities such as those shown in **Fig. 1****,** e.g. a plurality of UEs connected to the base station or a relay node relaying signals to/from the base station from/to one or more UEs, or a plurality of base stations each serving in one or more serving cells.

As illustrated in **Fig. 2****,** the communication apparatus 210 may comprise a transceiver 220 and circuitry (or processing and/or control circuitry) 230, and the base station 260 may comprise a transceiver 270 (e.g. a transmitter and/or a receiver) and (processing and/or control) circuitry 280.

The term *"**transceiver**"* refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 210 and a base station 260, without implying any limitation to networks such as 3GPPP NR networks.

As shown in **Fig. 2****,** provided is a communication apparatus 210. The communication apparatus 210 comprises a transceiver 220 and circuitry 230. The transceiver, in operation, receives a configuration of one or more candidate random access resources for transmitting an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus.

The circuitry 230, in operation, determines, based on the configuration, a random access resource for transmitting the uplink request from the one or more candidate random access resources, and the transceiver 220, in operation, transmits the uplink request on the determined random access resource.

As further shown in **Fig. 2****,** also provided is a base station 260. The base station 260 comprises a transceiver 270 and circuitry 280. The circuitry 280, in operation, determines a configuration of one or more candidate random access resources for a communication apparatus to transmit an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus.

The transceiver 270, in operation, transmits the configuration and receives the uplink request on a random access resource out of the one or more candidate random access resources.

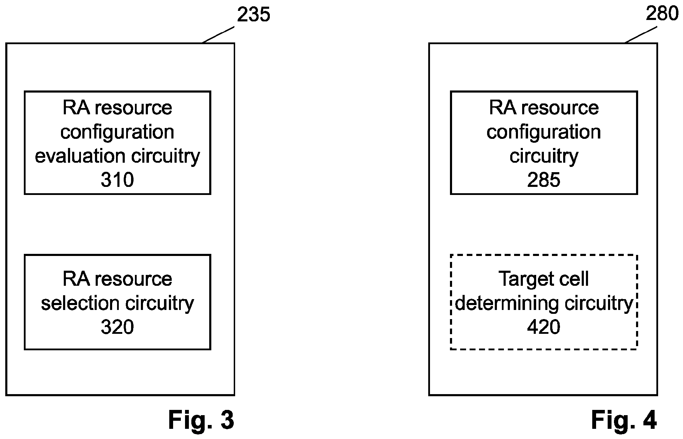

The UE circuitry 230 is exemplarily considered to comprise random access resource determination circuitry 235, which, in operation, determines, based on the configuration, the random access resource for transmitting the uplink request. As is further shown in **Fig. 3****,** random access (RA) resource determination circuitry 235 may comprise random access resource configuration evaluation circuitry 310 responsible for processing and/or evaluating the received configuration of random access resource(s), and random access resource selection circuitry 320, which, in operation, selects a random access resource from the configured candidate random access resources.

The gNB circuitry 280 is exemplarily considered to comprise random access resource configuration circuitry 285, which, in operation, determines the configuration of random access resources. As is further shown in **Fig. 4****,** the gNB circuitry 280 may further comprise target cell determining circuitry 420, which, in operation, determines a target cell on which the common channel is to be received, as will be described in more detail.

It is, however, noted that the UE circuitries 230, 235, 310 and 320 as well as gNB circuitries 280, 285 and 420 may implement more functionality than the above-mentioned, and the functionalities mentioned above are in general implemented by circuitries 230 and 280 without being limited to the respective circuitries 235, 410 and 420 or 285 and 420 described above.

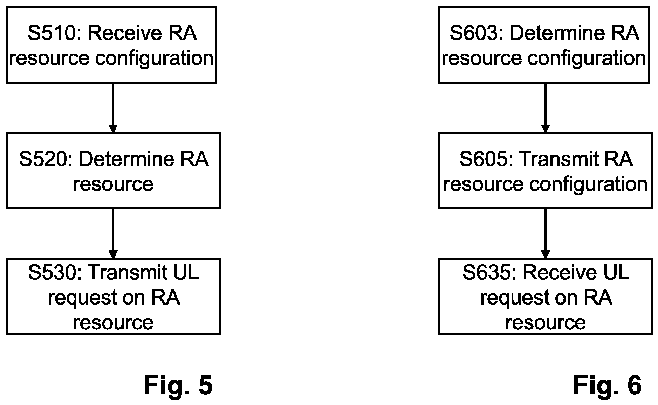

In correspondence with the above-described communication apparatus 210, provided is a communication method for a communication apparatus. As shown in **Fig. 5****,** the communication method includes a step S510 of receiving a configuration of one or more candidate random access resources for transmitting an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus.

The communication method for the communication apparatus further includes step S520 of determining, based on the configuration, a random access resource for transmitting the uplink request from the one or more candidate random access resources, and step S530 of transmitting the uplink request on the determined random access resource.

Moreover, in correspondence with the above-described base station 260, provided is a communication method for a base station. As shown in **Fig. 6****,** the communication method for the base station includes a step S603 of determining a configuration of one or more candidate random access resources for a communication apparatus to transmit an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus.

The communication method for the base station further comprises a step S605 of transmitting the resource configuration, and a step S635 of receiving the uplink request on a random access resource out of the one or more candidate random access resources.

In the present disclosure, as described above, a UE transmits an uplink request for switching or adaptation of a common channel. The "uplink request" may be the aforementioned UL WUS or a similar signal, but it is not limited to this particular term. Irrespectively of its name, the uplink request is a signal for requesting or triggering switching or adaptation of a common channel. The uplink request may also be referred to as an uplink trigger or triggering signal.

"Common channel", which may also be called "common signal", refers to a channel or signal, shared by a plurality of or even all UEs within a cell. Examples of common channel include SIB1, other SIB(s), PRACH, paging, or SSB. Thus, although some of the examples provided in this disclosure refer in particular to SIB1, the disclosure and its embodiments are also applicable to one or more of all the common channels.

Furthermore, "switching" or "adaptation" of a common channel may refer to the changing of an availability status from OFF (i.e. not available) to ON (i.e. available), of from ON to OFF. Adaptation may also refer to the changing of the common channel configuration, which may include one or more configurations from among the time domain resource (e.g. periodicity), spatial domain resource (e.g. beam indices or transmission configuration indicator (TCI) states), or frequency domain resource.

Moreover, the serving cell, which may also be called "camped" or "anchor" cell, may be "cell A", whereas a "triggered cell" may refer to a neighboring cell served by the same or different base station or transmission and reception point (TRP), or NES cell as mentioned above (it is noted that a neighboring cell at the same time a NES cell). In the present disclosure, as will be described in examples and embodiments to follow, a target cell of common channel switching or adaptation may be either a serving cell or a triggered cell.

Further, a "targeted behavior" of the communication apparatus refers to a purpose of the uplink request or trigger in terms of a targeted operation, operation scenario, or function. Exemplary targeted behaviors include receiving SIB1 or other SIB or system information, camping on the serving cell or a NES cell, launching or continuing a random access procedure using PRACH, and/or receiving SSB, or a combination of the above-mentioned behaviors. For instance, a UE may receive SIB1 to perform camping or to continue to launch random access.

In the configuration received by the communication apparatus 210, each of the configured candidate random access resources may be linked to one or more out of:
- an uplink timing reference,
- an configuration associated with a synchronization signal block (SSB) for mapping the synchronization signal block to the random access resource, or
- one or more power control parameters of the uplink request.

Furthermore, the candidate random access resources may be configured in one or more resource domains, e.g. time, frequency and/or code domain (e.g. a PRACH preamble or PRACH preamble resource). For instance, the candidate random access resources for the uplink request (e.g. UL WUS) may be PRACH resources. The PRACH resource (time/frequency/code domain) may be for instance be separately configured from *RACH-ConfigCommon,* a RRC information element (IE) for specifying cell-specific random access parameter (see e.g. 3GPP TS 38.331 V18.1.0, section 6.3.2) or defined as a parameter *AdditionalRACH-UL-WUS-Config.*

For instance, UE may be configured by RRC configuration or SIB, with one or multiple PRACH resources or resource sets as the random access resources for UL-WUS for common channel adaptation request/triggering.

The linked uplink timing reference provides a timing reference for the transmission of the uplink request and may be e.g. an SSB and possibly a Cell ID, from which the timing is acquired and which reflects or indicates which cell to send the UL request to, for example cell A or a NES cell where SIB1 needs to be triggered. A cell which provides a timing reference, e.g. by SSB, and to which the uplink request is sent, may be referred to as "reference cell".

The configuration associated with a SSB for mapping the synchronization signal block to the random access resource refers to a SSB-to-RO (RACH occasion) mapping. For instance, SSB-to-RO mapping may follow configuration associated with a SSB by *ssb-perRACH-OccasionAndCB-PreamblesPerSSB* parameter from the *RACH-ConfigCommon* IE or be another, newly defined parameter.

The power control parameters may define power characteristics including a power required for transmitting the uplink request to a given cell or a directivity of the power for transmitting the uplink request, as well as a reference cell or reference cell ID of the reference cell. Power control parameters may include PRACH power control parameter, e.g., reference cell and target received power, e.g. the parameter *preambleReceivedTargetPower* from the *RACH-ConfigCommon* IE and/or newly defined parameters.

As described above, the configuration of the random access resource for an uplink request or UL WUS is linked to one or more of the aforementioned parameters. The configuration may include the parameters, e.g. in a parameter set of information element of an RRC configuration, or be linked to parameters defined in a separate (RRC, SIB or other system information) configuration, e.g. linked by a cell ID associated with the configuration.

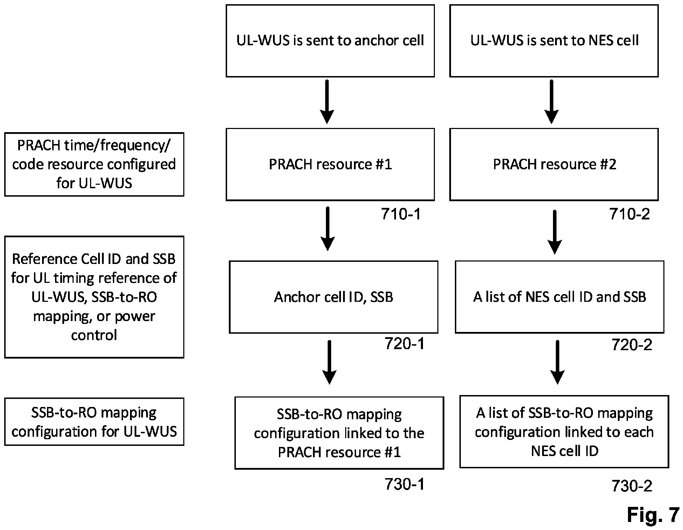

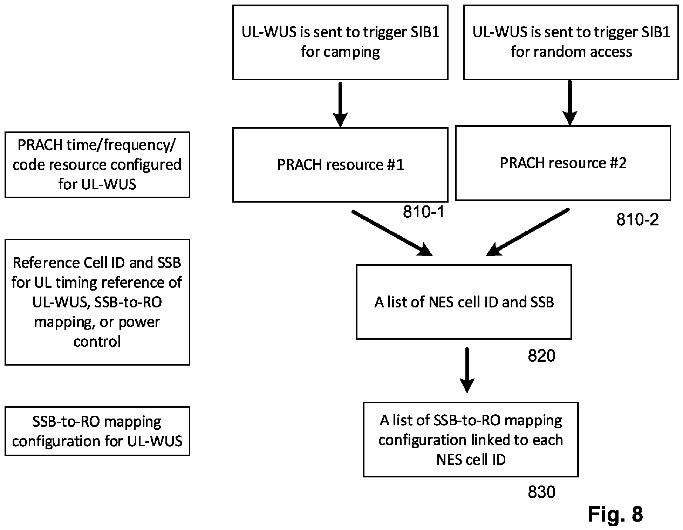

The exemplary linking of the random access resource configuration to resources and parameters is shown in **Figs. 7** and **8** and illustrated by arrows. In particular, **Fig. 7** illustrates an association between random access resources and cells. As can be seen in **Fig. 7****,** the uplink request may be sent either to the anchor cell (i.e. the current serving/camped cell or cell A) or to an NES cell. For these cases, different random access resources 710-1 and 710-2, illustrated as PRACH resources #1 and #2 in this example, are configured, on which the uplink request or WUS is transmitted.

In the case of an uplink request transmitted to the anchor cell, reference cell ID and SSB for UL timing reference 720-1 of the UL request, SSB-to-RO mapping, and/or power control may correspond to the anchor cell. Moreover, the SSB to RO mapping configuration for the uplink request 730-1 is linked to the random access resource for the anchor cell (PRACH resource #1) as a resource for transmitting the UL request.

In the case of the uplink request transmitted to a NES cell, a list of NES cell IDs and corresponding SSB for one or more NES cells 720-2 may be configured for UL timing reference of the uplink request, SSB-to-RO mapping, and/or power control. In a list of SSB-to-RO mapping configurations, a respective SSB-to-RO mapping configuration 730-2 may be linked to each NES cell ID. While **Fig. 7** indicates "PRACH resource #2", there may be a respective PRACH resource configured for and linked to each or all of the listed NES cells by SSB-to-RO mapping, depending on the configuration. For instance, depending on the configuration, all NES cells may share the same PRACH resource #2. Alternatively, individual PRACH resource can be configured to each of the listed NES cells.

**Fig. 8** illustrates an exemplary association between random access resources and targeted behaviors of the communication apparatus as purposes of the UL request or WUS. In particular, as shown in **Fig. 8****,** a first candidate random access resource 810-1 (e.g., PRACH resource #1 from among the plurality of configured random access resources may be associated with camping as a targeted behavior, and a second candidate random access resource 810-2 (e.g., PRACH resource #2) may be associated with random access as the targeted behavior. In accordance with the UE's targeted behavior (i.e. whether it intends to camp of perform random access), the UE selects either the first or the second random access resource.

It is noted that the indications "PRACH resource #1 and #2" in Figs. 7 and 8 are independent of each other and in general do not indicate the same resources. Moreover, as can be seen in Fig. 8, the same lists of NES cell IDs and SSB and of SSB-to-RO mapping configurations linked to NES cells may be referred for both targeted behaviors. It may be assumed that the list of SSB-to-RO mapping configurations lists mappings for both the first and the second random access resources.

It can be further seen that the lower two boxes in **Fig. 8** refer to configured lists of NES cell IDs 820 and associated SSB and SSB-to-RO mappings 830, in accordance with the case from **Fig. 7** where the UL WUS is sent to an NES cell. However, both targeted behaviors of camping and random access are also possible if the UE-WUS is sent to an anchor cell, in which case the lower two boxes in **Fig. 8** may be replaced by the corresponding boxes for the case "UL-WUS is sent to anchor cell" from Fig. 7.

Using the configuration of the random access resource and the linked configurations of associated parameters, UE the may transmit the UL-WUS to request or trigger the common channel adaptation. The UE may decide the resource of UL-WUS and procedure to for which the common channel adaptation is triggered or requested in accordance with one or more of out the following determinations:
- To which cell the PRACH uplink request is sent: Cell A (as an example of a current serving cell) or an NES Cell different from the current serving cell, (and possibly, which NES cell or cells).
- For which cell the common channel switching or adaptation is requested/triggered: Cell A (as an example of a current serving cell) or an NES Cell different from the current serving cell, (and possibly, which NES cell or cells). In other words, the UE may receive the common channel from a target cell, which may either be the serving cell (e.g. A cell) or a triggered cell (e.g. NES cell).
- The purpose or targeted behavior (e.g. "targeted function" or procedure of the request or triggering: e.g. a "targeted function" or "UE operation scenario" as mentioned above such as to camp or launch random access, similar to Scenarios 1 and 2 mentioned above.

### Uplink request sent to current serving cell (e.g. cell A)

In the following, exemplary embodiments will described relating to a case where the UE sends the uplink request, e.g. UL WUS, for common channel switching or adaptation to the current serving cell, which may be a cell A. In such a case, the UE may determine, as the random access resource for transmitting the uplink request, a random access resource associated with the current serving cell, and transmit the uplink request on the determined random access resource associated with the current serving cell. The UE may further receive a downlink indication of one of the one or more cells on which the common channel is to be received. The downlink indication may comprise a cell ID or a list of cell IDs of one or more cell(s) for which the switching or adaptation is to be triggered.

Like the uplink request, which is transmitted on a random access resource, the downlink indication may as well be a signal associated with a random access procedure. For instance, the downlink indication may be received as a random access response (RAR or Msg 2 (message 2)) or another message of a random access procedure.

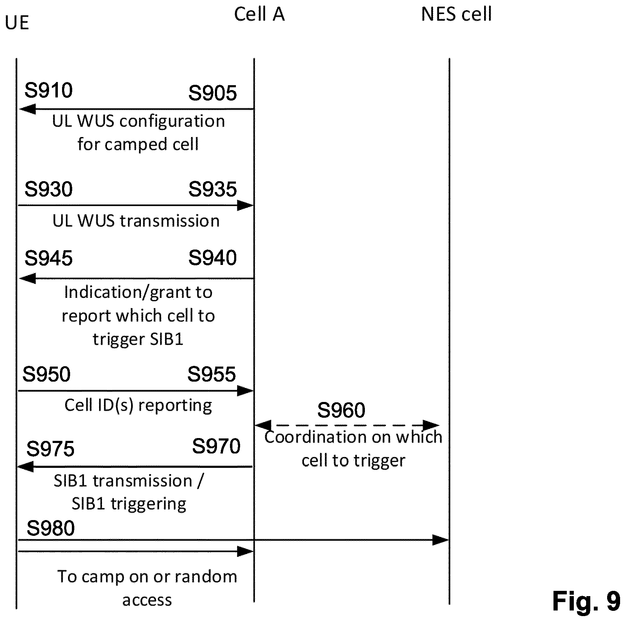

Exemplary message exchange between a UE and a gNB or gNBs serving a camped cell (Cell A) and a NES cell is shown in **Fig. 9****.** It is noted that steps S910 and S930 are implementations of steps S510 and S530, respectively, and steps S905 and S935 are implementations of steps S605 and S635, respectively.

For instance, to trigger SIB1 on one or a plurality of cells, the UE may be configured, in steps S905 and S910, with a dedicated PRACH resource for UL-WUS. The reference SSB for the UL WUS may be SSB of the Cell A for UL timing, SSB-to-RO mapping and power control. Moreover, as described above, the PRACH resource (time, frequency, and/or code domain resource) may be separately configured from the *RACH-ConfigCommon* IE or defined as *AdditionalRACH-ULWUS-Config.* The SSB-to-RO (RACH Occasion) mapping may follow the *ssb-perRACH-OccasionAndCB-PreamblesPerSSB* or be newly defined parameter. Moreover, the power control parameters of PRACH may include e.g. the parameter *preambleReceivedTargetPower* from *RACH-ConfigCommon* or a newly defined parameter. The UE may transmit the UL WUS to Cell A as per configuration, as shown in step S930, and the UL WUS is received by the gNB serving Cell A in step S935.

In some embodiments, the UE receives, in step S945, a downlink request for an uplink indication of one or more candidate cells among the one or more cells for selection of the target cell for receiving for performing the switching or adaptation of the common channel. The downlink request is transmitted by the gNB of Cell A in step S940. For instance, the uplink indication may comprise cell ID or a list of cell IDs. When receiving such downlink request, the UE determines one or more candidate cells and transmits the requested uplink indication in step S950, which is received by the gNB serving Cell A in step S955. For instance, the UE determines the candidate cells based on a result of channel measurements, e.g. reference signal-based measurements.

The gNB may select one of the candidate cells indicated by the uplink indication as the target cell, and indicate the selected target cell in the above-mentioned downlink indication. Each of the downlink request, the requested uplink indication of candidate cells, and the downlink indication of the target cell may be exchanged between the UE and the gNB as a message of a random access procedure. For instance, the UE receives, as the downlink request, a grant from the gNB to report for which cell or cells the SIB1 should be triggered. This grant may be received in RAR / Msg 2, or Msg 4 of the random access procedure. The UE may then report the cell ID(s) for SIB1 triggering, e.g. in Msg3 or Msg 5 of the random access procedure. As mentioned, the SIB1 is merely an example of a common channel, and the grant may in general report for which cell(s) the common channel should be triggered.

The UE may then receive in step S975 the feedback from the gNB, transmitted in step S970. This feedback need not be part of the random access process and may be later than Msg5. In particular, the UE may receive, as a feedback the SIB1(s) as a common channel of one or more cells as target cells, and/or one or more of the following indications: an indication on which cell(s) to receive the SIB1 (shown as "SIB1 triggering" in Fig. 9), an indication on which cell(s) to camp, or an indication on which cell to launch random access. "Launching random access" may include initiating or continuing a random access procedure on a NES cell or continuing random access on the current serving cell.

As illustrated by step S980, the UE may then camp on the cell or perform random access as a targeted behavior.

The one or more cells, which the UE indicates as candidate target cells, as well as the one or more target cells determined by the gNB, may include the current serving cell, e.g. cell A.

Furthermore, as shown by step S960, the gNB serving cell A may perform backhaul coordination with another gNB serving an NES cell, to decide and/or inform the NES cell(s) about which NES cells are to be triggered. For instance, backhaul coordination may be performed if Cell A and a NES Cell are served by different gNBs.

As described above, the UE transmits the uplink request for common channel adaptation, e.g. the UL WUS, to cell A. This may facilitate increasing NES gain, as the NES cell(s) do not need to monitor UL WUS.

Furthermore, when the UE has information on which NES cell to trigger, or whether to trigger NES cell or cell A, informing the network on this information may facilitate efficient NES cell triggering and service quality for the UE.

Furthermore, the UE may be enabled to inform the network on targeted or candidate NES cell(s) with little overhead. By reusing a random access procedure as shown, standard and implementation impact may be kept moderate.

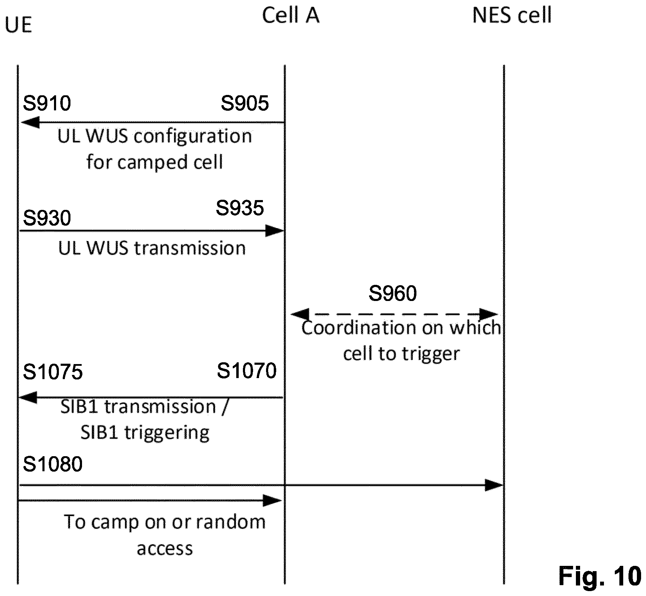

A further example of embodiments where the UE sends the triggering uplink request to cell A is shown in **Fig. 10****.** The embodiments corresponding to Fig. 10 are similar to the embodiments described with reference to Fig. 9. However, in accordance with Fig. 10, there is no explicit indication or reporting from the UE to the network which NES cells should be triggered. This is reflected in the omission of steps S945 to S955 in Fig. 9.

As shown in **Fig. 10****,** Steps 905 to S935 are the same as in **Fig. 9****,** and the corresponding description above also applies to the present embodiments. Furthermore, steps S1070, S1075, and S1080 are similar to corresponding steps S970, S975, and S980 and the description in general corresponds as well. However, steps S1070 and S1075 of transmitting and receiving SIB, SIB triggering or the other indication as shown above may already be performed as Msg2, Msg4, or later. Moreover, also in the example shown in Fig. 10, backhaul coordination regarding NES cell(s) to be triggered is possible, as shown in step S960.

As described above, the embodiments corresponding to Fig. 10, as well, may facilitate increasing NES gain, since the NES cell need not monitor UL WUS. Furthermore, reusing a random access procedure as shown, may keep standard and implementation impact moderate.

Moreover, when the UE has no information on which NES cell to trigger, it may be beneficial to trigger a NES cell without specific UE-preselected targeted NES cell such that network may decide which cell to turn ON, or on which cell to switch or adapt the common signal, to maximize the energy saving and balance the service quality.

### Uplink request sent to current serving cell (e.g. cell A)

In the following, exemplary embodiments will be described relating to a case where the UE sends the uplink request, e.g. UL WUS, for common channel switching or adaptation directly to a targeted NES cell where the common channel is to be switched or adapted.

In some embodiments to be described as follows, the UE determines, as a target cell on which the common channel is to be received, a triggered cell different from the current serving cell, determines, as the random access resource for transmitting the uplink request, random access resource associated with the target cell, and transmits the uplink request on the determined random access resource to be received by the triggered cell, e.g. an NES cell.

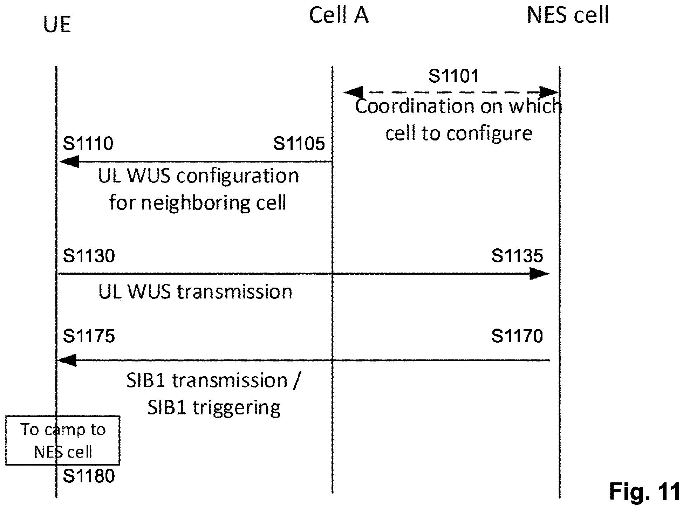

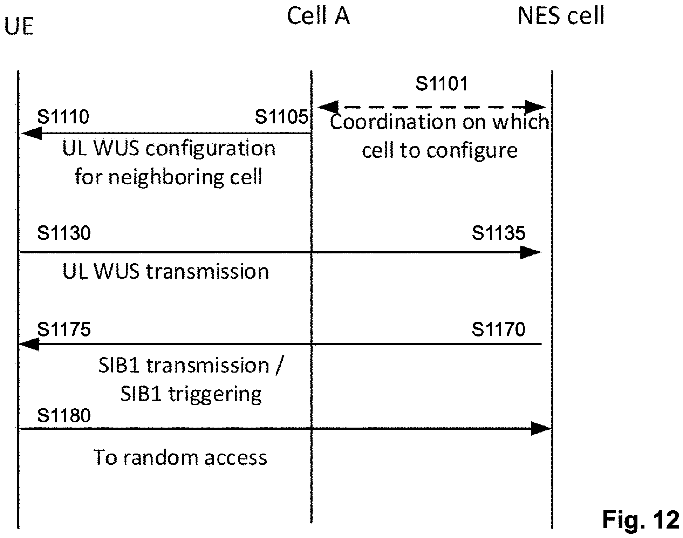

Exemplary operation message exchange between a UE and a gNB or gNBs serving a camped cell (Cell A) and a NES cell is shown in **Fig. 11** and in **Fig. 12****.** It is noted that steps S1110 and S1130 are implementations of steps S510 and S530 in Fig. 5, respectively, and steps S1105 and S1135 are possible implementations of steps S605 and S635 in Fig. 6, respectively.

To trigger SIB1 on one or multiple cells, UE may be configured, in stepsS1105 and S1110 with a dedicated PRACH resource for UL-WUS, wherein the PRACH resource set configuration may contain one or multiple of reference SSB(s) and cell ID(s) for UL timing, SSB-to-RO mapping and power control. Moreover, similar to the above-described embodiments, the PRACH resource (time/frequency/code domain) may be separately configured from the *RACH-ConfigCommon* IE or defined as *AdditionalRACH-ULWUS-Config.*

The SSB to RO (RACH Occasion) mapping may be defined individually, for each configured Cell ID or reference SSB. For instance, the SSB-to-RO mapping may be configured by a parameter using same or a similar structure to *ssb-perRACH-OccasionAndCB-PreamblesPerSSB.*

Moreover, the power control of PRACH, e.g., including the parameter *preambleReceivedTargetPower* or a similar parameter, may be defined individually, for each configured Cell ID or reference SSB, in a parameter which may be configured separately from the above-mentioned *RACH-ConfigCommon* IE shown e.g. in 3GPP TS 38.331 V18.1.0.

The UE transmits, in step S1130, the uplink request, e.g. the UL WUS, using a configured resource or resource set associated with the selected NES cell, which is the target NES cell for channel adaptation, which is received by the NES cell in step S1135. In step S1130, the UE uses the targeted NES cell as a reference for one or more from UL timing, SSB-to-RO mapping, and/or power control calculation.

In step S1175, the UE receives the SIB1 transmitted from the NES cell in step S1170. Optionally, the UE may receive a feedback from the NES cell on whether SIB1 is ON.

After receiving the SIB1, the UE behaves according to a targeted behavior operation scenario.

As shown in **Fig. 11****,** in step S1180, the UE camps on the targeted NES cell. In this case, a feedback that the SIB is ON indicates that the NES cell is valid to camp on. It is noted that Fig. 11 may be implemented using a two-step random access procedure between the UE and the NES cell, where the two steps correspond to the UL WUS transmission as part of Msg A and the feedback from the NES cell on whether the SIB1 is ON as random access response (Msg B).

Alternatively, as shown in **Fig. 12** may optionally receive feedback, e.g. in RAR/Msg2 from the NES cell on whether the SIB1 is ON and whether to continue the initial random access after the random access response. If the RAR of steps S1170 and S1175 indicates that the SIB is on, the UE continues the random access with the NES cell in step S1180.

The NES cell may be informed on the UE's targeted behavior, e.g. whether the UE intends to camp or continue random access, by the random access resource on which the uplink request or UL WUS is received. For instance, for one or more or all NES cells respectively, different random access resources (e.g. in time, code and/or frequency) may be configured, including a resource for camping and a resource for random access, and the UE selects the resource for transmitting the uplink request depending on the targeted behavior, as shown above with respect to **Fig. 8****.**

As shown in both **Figs 11** **and** **12** as a step S1101, backhaul coordination between Cell a (transmitting the configuration to the UE) and NES cell(s) may be used for proper UL WUS configuration and linked cell ID.

In accordance with **Figs. 11** and **12****,** as described, the UE directly sends an uplink request to the NES cell to trigger adaptation of the SIB1, e.g. as an on-demand SIB. If the UE has information, e.g. based on measurements, on which NES to trigger direct triggering of the NES cell may facilitate reducing the latency.

Moreover, if a specific random access resource and corresponding procedure for SIB triggering for the purpose of UE camping on the target NES cell is configured and used, as shown in **Fig. 11****,** no contention resolution is needed. This may facilitate reducing control overhead for the UL WUS.

On the other hand, in the case of the UE continuing random access, as shown in **Fig. 12****,** contention resolution is needed to accommodate access capacity possibly for multiple UEs. In such a scenario, configuration of a specific UL WUS resource and a corresponding procedure for SIB1 triggering for the UE to launch, or continue, random access, may facilitate for the network to allocate reasonable amount of resource for UL WUS.

### Further notes

In some embodiments described above, the UE receives, as a feedback from the NES cell, an indication on whether the SIB1 in the target cell, as an example of a common channel, is ON, or from the current serving cell, an indication of cells on which the SIB1 is to be received, e.g. cells where the SIB1 is on.

More generally, the UE may receive a status indication indicating one or both of an availability status or a transmission pattern of the common channel, e.g. SIB 1 or any including the examples mentioned in this disclosure, on the target cell, which may be cell A or an NES cell, thereby informing the UE on the switching and/or adaptation of the availability status and or transmission pattern of the common channel. As described above, switching of the availability status may include switching from OFF to on as well as switching from OFF to ON. Moreover, the transmission pattern may refer to the common channel configuration as mentioned above, e.g. changes in one or more out of the time domain, spatial domain, or frequency domain resource for the common channel.

For instance, as described above, the UE may request an on-demand SIB1 in the serving cell or an NES cell, and transmits an UL WUS as an uplink request. However, with the uplink request, the UE may also inform the network that a common channel such as SIB1 is no longer needed on an NES cell, and transmit the uplink request for triggering deactivation of the common signal. In such a case, the status indication may indicate successful switching of the SIB from ON to OFF.

The UE may receive the status indication of the availability status or transmission pattern as a random access (Msg 2) response or another downlink message of the random access procedure, e.g. Msg 4.

Moreover, as described above, an intended behavior of the UE may include camping on a target cell or performing random access on the target cell. In correspondence with the targeted behavior, the UE may receive, e.g. in Msg 2, RAR, an indication whether to continue 4-step random access procedure (or a procedure involving more steps), e.g. when random access is the targeted behavior, procedure, or just stop after Msg 2 without need to send Msg 3, e.g. when camping is intended, or to stop after sending Msg 3.

In case the targeted cell (e.g. NES) for the uplink channel adaptation or switching is different from the cell to which the UL request is transmitted, launching random access may include starting anew with the random access procedure. On the other hand, in case that the uplink request is received by the target cell, at least the first two messages of the random access procedure are already accomplished by the uplink request and the downlink random access response, and the random access may be continued, as shown e.g. in **Figs. 11** and **12****.**

It is further noted that in the above description related to the base station and its corresponding communication method, "determining a configuration" may refer either to generation of a communication or determination of the configuration by obtaining the configuration from another base station e.g. via backhaul. Accordingly, the base station may refer either to the serving base station or a base station of a targeted cell that receives the configuration from another base station and receives the uplink request from the UE and subsequently performs uplink channel adaptation and/or switching and informs the UE on the adaptation / switching.

Furthermore, the base station and communication method for a base station, e.g. as shown in **Figs 11** and **12****,** may refer to a system including a first base station serving a first cell that determines and transmits the configuration (steps S603 and S605) and a second base station serving a second cell that receives the UL request in accordance with the configuration. It is, however noted, that the present disclosure is not limited to remote base stations, as Cell A and NES cell may for instance be served by a same base station.

In the examples shown in **Figs. 10** **and** **11****,** UE's uplink request transmission and the gNB's response (feedback regarding the common channel, e.g. triggering) may be implemented using a two-step random access procedure. Two-step RACH may include Msg A (preamble + payload from UE) and Msg B (feedback from gNB) is used. It is noted that Msg A may also contain the cell ID, indicating the cell to which Msg A is transmitted, and possibly the cell ID of the targeted cell of the UE's DIB1 reception and/or intended behavior (e.g. camping).

### NR Random Access

Random access is a procedure that is performed when a UE establishes a connection with the network, e.g. an initial connection or a connection after a period of inactivity. A logical channel for RACH is called RACH (random access channel), and the corresponding physical random access channel is abbreviated as PRACH. There are different RACH procedures depending on the use case.

RACH in NR includes the concept of RACH occasions, where a plurality of preambles (e.g. 64 preambles) are reused by different frequency and time resources called "RACH occasions" (RO). By a configured mapping between SSBs and ROs, a gNB can determine the SSB to which a UE is associated or linked to. For instance, when beamsweeping is performed, different SSBs are transmitted in different directions and at different timings.

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

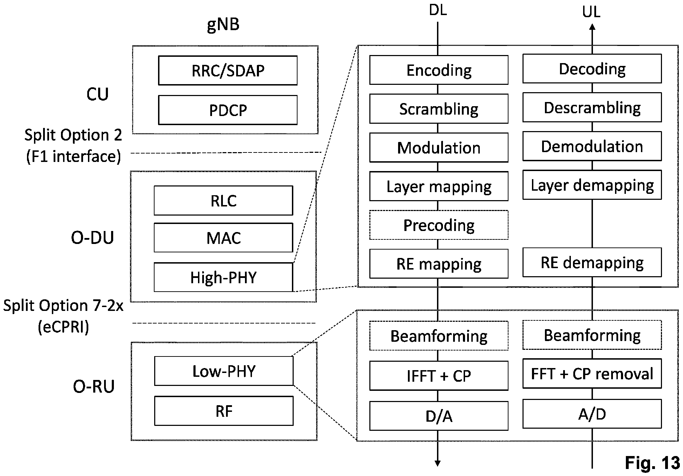

**FIG. 13** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Aspects

Summarizing, provided are the following aspects.

Aspect 1: A communication apparatus, comprising: a transceiver, which, in operation, receives a configuration of one or more candidate random access resources for transmitting an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus; and
circuitry which, in operation, determines, based on the configuration, a random access resource for transmitting the uplink request from the one or more candidate random access resources, wherein the transceiver, in operation, transmits the uplink request on the determined random access resource.

Aspect 2: The communication apparatus according to aspect 1, wherein the circuitry, in operation, determines, as the random access resource for transmitting the uplink request, a random access resource associated with the current serving cell, and the transceiver, in operation, receives a downlink indication indicating one of the one or more cells as a target cell on which the common channel is to be received.

Aspect 3: The communication apparatus according to aspect 2, wherein the transceiver, in operation, receives the downlink indication as a random access response.

Aspect 4: The communication apparatus according to aspect 2, wherein the transceiver, in operation, receives a downlink request for an uplink indication of one or more candidate cells among the one or more cells for selection of the target cell, the circuitry, in operation, determines the one or more candidate cells, and the transceiver, in operation, transmits the uplink indication.

Aspect 5: The communication apparatus according to aspect 4, wherein the transceiver, in operation, receives the downlink request, transmits the uplink indication, and receives the downlink indication each as a message of a random access procedure.

Aspect 6: The communication apparatus according to aspect 1, wherein the circuitry, in operation, determines, as a target cell on which the common channel is to be received, a triggered cell different from the current serving cell, and determines, as the random access resource for transmitting the uplink request, random access resource associated with the target cell.

Aspect 7: The communication apparatus according to any one of aspects 2 to 6, wherein the transceiver, in operation, receives a status indication indicating one or both of an availability status or a transmission pattern of the common channel on the target cell.

Aspect 8: The communication apparatus according to aspect 7, wherein the transceiver, in operation, receives the status indication as a random access response.

Aspect 9: The communication apparatus according to any one of aspects 1 to 8, wherein the one or more random access resources are a plurality of random access resources, a first candidate random access resource from among the plurality of random access resources is associated with camping as a targeted behavior, a second candidate random access resource is associated with random access as the targeted behavior, and the circuitry, in operation, selects the first candidate random access resource or the second candidate random access resource in accordance with the targeted behavior of the communication apparatus.

Aspect 10: The communication apparatus according to any one of aspects 1 to 9, wherein each of the configured candidate random access resources is linked to one or more out of:
- an uplink timing reference,
- an configuration associated with a synchronization signal block for mapping the synchronization signal block to the random access resource, or
- one or more power control parameters of the uplink request.

Aspect 11: The communication apparatus according to any one of aspects 1 to 10, wherein the transceiver, in operation, receives the common channel.

12. A base station, comprising: circuitry, which, in operation, determines a configuration of one or more candidate random access resources for a communication apparatus to transmit an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus; and
a transceiver, which, in operation, transmits the configuration and receives the uplink request on a random access resource out of the one or more candidate random access resources.

Aspect 13: The base station according to aspect 12, wherein the transceiver, in operation, transmits a downlink indication indicating one of the one or more cells as a target cell on which the common channel is to be received.

Aspect 14: The base station according to aspect 13, wherein the transceiver, in operation, transmits the downlink indication as a random access response.

Aspect 15: The base station according to aspect 13, wherein the transceiver, in operation, transmits a downlink request for an uplink indication of one or more candidate cells among the one or more cells for selection of the target cell and receives the uplink indication.

Aspect 16: The base station according to aspect 15, wherein the transceiver, in operation, transmits the downlink request, receives the uplink indication, and transmits the downlink indication each as a message of a random access procedure.

Aspect 17: The base station according to any one of aspects 1 to 16, comprising a backhaul interface which in operation, transmits the configuration

Aspect 18: A base station serving a target cell on which a common channel is to be transmitted, comprising: a backhaul interface which, in operation, which, in operation, receives a configuration of one or more candidate random access resources for a communication apparatus to transmit an uplink request for switching or adaptation of a common channel, wherein each of the one or more candidate random access resources is associated with one or both out of:
- a cell from among one or more cells including a current serving cell of the communication apparatus and the target cell, or
- a targeted behavior of the communication apparatus; and
a transceiver, which, in operation, receives the uplink request on a random access resource out of the one or more candidate random access resources associated with the target cell.

Aspect 19: The base station according to any one of aspects 13 to 18, wherein the transceiver, in operation, transmits a status indication indicating one or both of an availability status or a transmission pattern of the common channel on the target cell.

Aspect 20: The base station according to aspect 19, wherein the transceiver, in operation, transmits the status indication as a random access response.

Aspect 21: The base station according to any one of aspects 12 to 20, wherein the one or more random access resources are a plurality of random access resources, a first candidate random access resource from among the plurality of random access resources is associated with camping as a targeted behavior, a second candidate random access resource is associated with random access as the targeted behavior, and the transceiver, in operation, receives the uplink request on the first candidate random access resource or the second candidate random access resource in accordance with the targeted behavior of the communication apparatus.

Aspect 22: The base station according to any one of aspects 12 to 21 wherein each of the configured candidate random access resources is linked to one or more out of:
- an uplink timing reference,
- an index of a synchronization signal block for mapping the synchronization signal block to the random access resource, or
- one or more power control parameters of the uplink request.

Aspect 23: The base station according to any one of aspects 12 to 22, wherein the transceiver, in operation, transmits the common channel.

Aspect 24: A communication method for a communication apparatus, comprising the steps of: receiving a configuration of one or more candidate random access resources for transmitting an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus; and
determining, based on the configuration, a random access resource for transmitting the uplink request from the one or more candidate random access resources; and transmitting the uplink request on the determined random access resource.

The communication method according to the aspect 24 may be provided in combination with aspects corresponding to any one of aspects 2 to 11.

Aspect 25: A communication method for a base station, comprising: determining a configuration of one or more candidate random access resources for a communication apparatus to transmit an uplink request for switching or adaptation of a common channel, wherein each of the one or more candidate random access resources is associated with one or both out of:
- a cell from among one or more cells including a current serving cell of the communication apparatus, or
- a targeted behavior of the communication apparatus;
transmitting the configuration; and receiving the uplink request on a random access resource out of the one or more candidate random access resources.

The communication method according to the aspect 25 may be provided in combination with aspects corresponding to any one of aspects 13 to 23.

Aspect 26: An integrated which, in operation, causes a communication apparatus to carry out the steps of the communication method according to aspect 24.

Aspect 27: An integrated which, in operation, causes a base station to carry out the steps of the communication method according to aspect 25.

Aspect 28: A computer-readable medium storing instructions which, when executed by a processor of a communication apparatus, causes the communication apparatus to carry out the steps of the communication method according to aspect 24.

Aspect 29: A computer-readable medium storing instructions which, when executed by a processor of a base station, causes the base station to carry out the steps of communication method according to aspect 25.

## Claims

1. A communication apparatus, comprising:
a transceiver, which, in operation, receives a configuration of one or more candidate random access resources for transmitting an uplink request for switching or adaptation of a common channel, wherein each of the one or more candidate random access resources is associated with one or both out of:
• a cell from among one or more cells including a current serving cell of the communication apparatus, or
• a targeted behavior of the communication apparatus; and
circuitry which, in operation, determines, based on the configuration, a random access resource for transmitting the uplink request from the one or more candidate random access resources,
wherein the transceiver, in operation, transmits the uplink request on the determined random access resource.

2. The communication apparatus according to claim 1, wherein
the circuitry, in operation, determines, as the random access resource for transmitting the uplink request, a random access resource associated with the current serving cell, and
the transceiver, in operation, receives a downlink indication indicating one of the one or more cells as a target cell on which the common channel is to be received.

3. The communication apparatus according to claim 2, wherein the transceiver, in operation, receives the downlink indication as a random access response.

4. The communication apparatus according to claim 2, wherein
the transceiver, in operation, receives a downlink request for an uplink indication of one or more candidate cells among the one or more cells for selection of the target cell,
the circuitry, in operation, determines the one or more candidate cells, and
the transceiver, in operation, transmits the uplink indication.

5. The communication apparatus according to claim 4, wherein the transceiver, in operation, receives the downlink request, transmits the uplink indication, and receives the downlink indication each as a message of a random access procedure.

6. The communication apparatus according to claim 1, wherein the circuitry, in operation:
determines, as a target cell on which the common channel is to be received, a triggered cell different from the current serving cell, and
determines, as the random access resource for transmitting the uplink request, random access resource associated with the target cell.

7. The communication apparatus according to any one of claims 2 to 6, wherein the transceiver, in operation, receives a status indication indicating one or both of an availability status or a transmission pattern of the common channel on the target cell.

8. The communication apparatus according to claim 7, wherein the transceiver, in operation, receives the status indication as a random access response.

9. The communication apparatus according to any one of claims 1 to 8, wherein the one or more random access resources are a plurality of random access resources, a first candidate random access resource from among the plurality of random access resources is associated with camping as a targeted behavior, a second candidate random access resource is associated with random access as the targeted behavior, and
the circuitry, in operation, selects the first candidate random access resource or the second candidate random access resource in accordance with the targeted behavior of the communication apparatus.

10. The communication apparatus according to any one of claims 1 to 9, wherein each of the configured candidate random access resources is linked to one or more out of:
• an uplink timing reference,
• an configuration associated with a synchronization signal block for mapping the synchronization signal block to the random access resource, or
• one or more power control parameters of the uplink request.

11. The communication apparatus according to any one of claims 1 to 10, wherein the transceiver, in operation, receives the common channel.

12. A base station, comprising:
circuitry, which, in operation, determines a configuration of one or more candidate random access resources for a communication apparatus to transmit an uplink request for switching or adaptation of a common channel, wherein each of the one or more candidate random access resources is associated with one or both out of:
• a cell from among one or more cells including a current serving cell of the communication apparatus, or
• a targeted behavior of the communication apparatus; and
a transceiver, which, in operation, transmits the configuration and receives the uplink request on a random access resource out of the one or more candidate random access resources.

13. A communication method for a communication apparatus, comprising the steps of:
receiving a configuration of one or more candidate random access resources for transmitting an uplink request for switching or adaptation of a common channel,
wherein each of the one or more candidate random access resources is associated with one or both out of:
• a cell from among one or more cells including a current serving cell of the communication apparatus, or
• a targeted behavior of the communication apparatus;
determining, based on the configuration, a random access resource for transmitting the uplink request from the one or more candidate random access resources; and
transmitting the uplink request on the determined random access resource.

14. A communication method for a base station, comprising:
determining a configuration of one or more candidate random access resources for a communication apparatus to transmit an uplink request for switching or adaptation of a common channel, wherein each of the one or more candidate random access resources is associated with one or both out of:
• a cell from among one or more cells including a current serving cell of the communication apparatus, or
• a targeted behavior of the communication apparatus; and
transmitting the configuration; and
receiving the uplink request on a random access resource out of the one or more candidate random access resources.
